# DEMANDE DE BREVET EUROPEEN

(11) **EP 2 056 565 A1**
(43) Date de publication de la demande: **06.05.2009**
(21) Numéro de dépôt: 07301510.9
(22) Date de dépôt: 29.10.2007
(51) Int. Cl.: H04L 29/06

(54) **Procédé d'authentification d'un utilisateur accédant à un serveur distant à partir d'un ordinateur**

(71) Demandeur: Axalto, 92190 Meudon (FR)
(72) Inventeur: Lafargue, Edouard, 13705 LA CIOTAT CEDEX (FR); Rangoni, Gabriel, 13705 LA CIOTAT CEDEX (FR); Sion, Jérôme, 13705 LA CIOTAT CEDEX (FR)

(57) **Abrégé**

L'invention concerne un procédé d'authentification d'un utilisateur (10) accédant à un serveur distant (30) à partir d'un ordinateur (20).

Selon l'invention, le procédé consiste à :
- se connecter au serveur distant (30) à partir de l'ordinateur (20) ;
- s'identifier auprès du serveur distant (30) à l'aide d'un identifiant propre à l'utilisateur (10) ;
- authentifier le serveur distant (30) au niveau de l'ordinateur (20) ;
- transmettre du serveur distant (30) à l'ordinateur (20) un message imprédictible ;
- établir une communication entre le serveur distant (30) et un terminal (40) appartenant à l'utilisateur (10) ;
- authentifier le serveur distant (30) au niveau du terminal (40) ;
- authentifier le terminal (40) au niveau du serveur distant (30) ;
- inviter l'utilisateur (10) à entrer le message imprédictible dans le terminal (40) ;
- transmettre au serveur distant (30) à l'aide du terminal (40) le message entré par l'utilisateur (10) dans le terminal (40) ;
- en cas de concordance du message entré par l'utilisateur (10) dans le terminal (40) avec le message imprédictible, authentifier l'utilisateur (10) dans le serveur distant (30).

## Description

Le domaine de l'invention est celui de la sécurisation de l'accès à des ressources en ligne, telles que par exemple des services Web. Plus précisément, la présente invention concerne un procédé permettant à un utilisateur d'établir une authentification mutuelle entre un service distant et l'utilisateur, par l'intermédiaire de l'ordinateur qu'il utilise pour se connecter à ce service distant.

Dans le cadre de la présente invention, on considérera qu'un utilisateur souhaite se connecter à un serveur distant, par exemple à un service marchand tel qu'eBay^{™}, pour y effectuer des transactions. L'exécution de transactions (achat ou vente de produits) nécessite, pour des raisons de sécurité, une authentification mutuelle entre le serveur du site et l'utilisateur. Par authentification mutuelle, on entend d'une part que l'utilisateur doit pouvoir être certain qu'il accède bien à un serveur du site d'eBay^{™} (auquel il va transmettre des coordonnées personnelles telles que des coordonnées bancaires par exemple) et d'autre part que le serveur du site d'eBay^{™} soit certain que l'utilisateur qui désire effectuer des transactions corresponde bien à celui qui s'est préalablement enregistré auprès de ce site et qu'il ne s'agit donc pas d'un fraudeur.

L'authentification est donc la procédure qui consiste, pour un système informatique, à vérifier l'identité d'une entité (personne, ordinateur...), afin d'autoriser l'accès de cette entité à des ressources (systèmes, réseaux, applications...).

L'authentification permet donc de valider l'authenticité de l'entité en question et, à la différence de l'identification qui permet de connaître l'identité d'une entité, l'authentification permet de vérifier cette identité.

Les solutions les plus couramment employées pour effectuer une authentification d'un utilisateur auprès d'un serveur distant reposent en général sur un mot de passe combiné avec un nom d'utilisateur. Ces solutions présentent l'inconvénient d'être peu sécurisées car l'utilisateur peut, hormis avoir perdu son mot de passe et ne plus donc pouvoir accéder au serveur, s'être fait voler son mot de passe et son nom d'utilisateur. Un tiers mal intentionné peut alors se faire passer pour le véritable détenteur du nom d'utilisateur et du mot de passe et effectuer des transactions à sa place.

Une autre solution connue consiste à authentifier l'utilisateur à l'aide d'une clé, par exemple de type USB, à insérer dans l'ordinateur. Cette authentification est relativement sécurisée mais l'utilisateur peut s'être fait voler sa clé et le problème précédemment invoqué n'est pas évité. De plus, la clé doit pouvoir être insérée dans l'ordinateur, ce qui n'est pas toujours possible, par exemple dans des cybercafés où les utilisateurs n'ont pas accès aux ordinateurs eux-mêmes mais uniquement aux interfaces écran/clavier/souris. Ceci n'est pas non plus possible lorsque le nombre de ports de l'ordinateur est restreint et qu'il ne reste plus de port USB disponible. Enfin, la compatibilité de ce type de solution est généralement restreinte à un nombre réduit de systèmes d'exploitation, par exemple ne fonctionne qu'avec Microsoft^{™} et pas avec Apple^{™}.

Le même problème de vol et de compatibilité se pose lorsque l'utilisateur désire se faire authentifier par une carte à puce.

Il est également connu de sécuriser des transactions par SSL 2.0. Ce procédé est basé sur un échange de clés entre le client/utilisateur et un serveur distant. La transaction sécurisée par SSL se fait selon le modèle suivant :

Dans un premier temps, le client se connecte au site marchand sécurisé par SSL et lui demande de s'authentifier.

Le serveur, à réception de la requête, envoie un certificat au client, contenant la clé publique du serveur, signée par une autorité de certification.

Si l'autorité de certification est connue par l'utilisateur, par exemple lorsque l'autorité de certification est présente par défaut dans les magasins de certificat du navigateur Internet, l'utilisateur est en mesure de vérifier la validité du certificat serveur et de s'assurer de son authenticité.

Le client vérifie la validité du certificat (et donc l'authenticité du marchand), puis crée une clé secrète aléatoire (plus exactement un bloc prétendument aléatoire), chiffre cette clé à l'aide de la clé publique du serveur, puis lui envoie le résultat (la clé de session).

Le serveur est en mesure de déchiffrer la clé de session avec sa clé privée. Ainsi, les deux entités sont en possession d'une clé commune dont ils sont seuls connaisseurs. Le reste des transactions peut se faire à l'aide de clé de session, garantissant l'intégrité et la confidentialité des données échangées.

L'inconvénient de cette solution est que, par défaut, l'établissement de ce canal ne permet qu'une authentification à sens unique : l'utilisateur authentifie le serveur mais une authentification supplémentaire est nécessaire pour que le serveur authentifie l'utilisateur.

Une autre solution connue est décrite dans la demande de brevet WO/03063411 intitulée « Procédé d'authentification à deux facteurs avec mot de passe éphémère à usage unique ».

Cette autre solution consiste en un procédé d'authentification, auprès d'un système d'information, d'un utilisateur disposant d'un téléphone mobile qui comprend un moyen d'affichage de données, un moyen d'entrée de données et un moyen de lecture d'un support de données. Le téléphone mobile est équipé d'une carte à puce comportant des applications à clé asymétrique et un logiciel pour exploiter cette clé. Lorsque l'utilisateur émet un message de demande d'accès depuis un terminal informatique émetteur vers le système d'information, ce dernier élabore un message SMS contenant un mot de passe à usage unique et à durée de validité limitée et émet le message SMS à destination du téléphone mobile de l'utilisateur. Ensuite, l'utilisateur, à l'aide du moyen d'entrée de données de son téléphone mobile, introduit un code personnel secret dans le téléphone mobile et soumet un support de données personnel au moyen de lecture du téléphone mobile qui déchiffre une clé privée attribuée à l'utilisateur, afin que le téléphone mobile soit autorisé à décoder le message SMS et à en extraire le mot de passe. Enfin, l'utilisateur envoie, par le terminal informatique émetteur, le mot de passe à destination du système d'information qui autorise l'accès de l'utilisateur.

Cette solution est donc basée sur l'utilisation d'un SMS chiffré par clé asymétrique. Son inconvénient est qu'elle nécessite le déploiement d'une infrastructure propriétaire de diffusion de clés asymétriques en dehors de tout système existant tel que des infrastructures de gestion de clés (PKI) reposant sur l'utilisation de certificats numériques standardisés de type X509.

Un des objectifs de l'invention est de permettre à un utilisateur de services, typiquement un internaute, d'accéder à des services de manière simple et sécurisée, quel que soit l'ordinateur qu'il utilise tout en offrant un niveau de sécurité plus important qu'un simple nom d'utilisateur associé à un mot de passe. Cet ordinateur peut donc être son ordinateur personnel, celui de son bureau, celui d'une connaissance ou d'un ami ou celui d'un cybercafé.

Cet objectif, ainsi que d'autres sui apparaîtront par la suite, est atteint grâce à un procédé d'authentification d'un utilisateur accédant à un serveur distant à partir d'un ordinateur, le procédé consistant à :
- se connecter au serveur distant à partir de l'ordinateur ;
- s'identifier auprès du serveur distant à l'aide d'un identifiant propre à l'utilisateur ;
- authentifier le serveur distant au niveau de l'ordinateur ;
- transmettre du serveur distant à l'ordinateur un message imprédictible ;
- établir une communication entre le serveur distant et un terminal appartenant à l'utilisateur ;
- authentifier le serveur distant au niveau du terminal ;
- authentifier le terminal au niveau du serveur distant ;
- inviter l'utilisateur à entrer le message imprédictible dans le terminal ;
- transmettre au serveur distant à l'aide du terminal le message entré par l'utilisateur dans le terminal ;
- en cas de concordance du message entré par l'utilisateur dans le terminal avec le message imprédictible, authentifier l'utilisateur dans le serveur distant.

Les authentifications précitées sont avantageusement réalisées par protocole SSL.

Préférentiellement, le terminal est un terminal mobile comprenant une carte SIM TCP/IP.

Dans un mode de mise en oeuvre avantageux, le terminal mobile est un téléphone mobile.

Dans un mode de mise en oeuvre alternatif, le terminal mobile est un PDA.

L'authentification du terminal au niveau du serveur distant est préférentiellement réalisée après que l'utilisateur ait entré un code PIN dans le terminal. Ceci permet de mettre en oeuvre une authentification à deux facteurs.

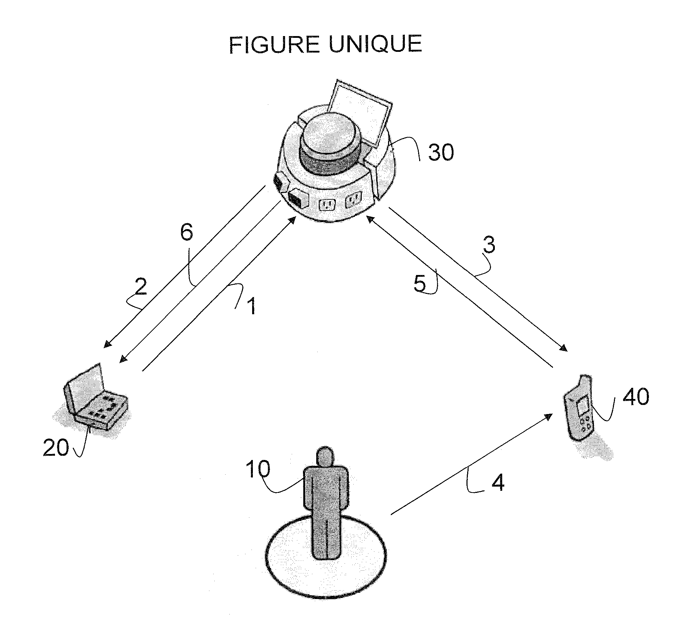

L'invention sera mieux comprise à la lecture de la description suivante d'un mode de mise en oeuvre préférentiel, donné à titre illustratif et non limitatif, et de la figure unique annexée représentant de forme schématique la succession des étapes du procédé selon l'invention.

Sur cette figure, un utilisateur 10 accède à un ordinateur 20 pour se connecter à un serveur distant 30, par exemple un serveur d'eBay^{™} précédemment donné en exemple. L'utilisateur 10 dispose également d'un terminal 40, ici constitué par un téléphone portable comprenant une carte Sim (non représentée) supportant un protocole de transmission par Internet, par exemple le protocole TCP/IP, et un protocole d'échange sécurisé et mutuellement authentifié tel que le protocole SSL. Comme on le verra par la suite, on entend par « sécurisé » un protocole d'échange permettant d'authentifier l'utilisateur 10 du terminal 40 auprès du serveur 30.

La carte Sim comprend le certificat de l'utilisateur 10 (délivré et/ou dans lequel le serveur distant 30 a confiance) et également un certificat d'un tiers de confiance permettant à la carte Sim d'avoir confiance dans les certificats présentés par le serveur 30.

Pour se connecter au serveur 30 du site auquel il veut accéder, l'utilisateur 10 utilise l'ordinateur 20 de manière classique en entrant l'adresse Web du site pour accéder à sa page d'accueil générale. Il entre alors son nom d'utilisateur (par exemple son identifiant). La connexion identifiée par 1 entre l'ordinateur 20 et le serveur 30 est protégée par SSL (le protocole de sécurisation des échanges sur Internet préalablement présenté) mais l'authentification SSL 1 est unidirectionnelle, c'est-à-dire que seule l'identité du serveur 30 est authentifiée et non celle de l'utilisateur 10.

Le serveur 30 renvoie alors, schématisée par une flèche 2, un message imprédictible à l'utilisateur 10, par exemple un mot généré de manière aléatoire ou pseudo-aléatoire, l'essentiel étant que l'utilisateur 10 ne puisse connaître ce message avant de l'avoir reçu.

Le serveur 30 consulte alors le profil de l'utilisateur 10 et récupère l'identifiant d'un terminal de cet utilisateur 10, ce terminal étant, dans le mode de mise en oeuvre représenté, constitué par le téléphone mobile 40 de l'utilisateur identifié par le numéro de téléphone de la carte Sim qu'il renferme. Bien entendu, pour que cela soit possible, il est nécessaire que l'utilisateur 10 ait préalablement renseigné (au cours d'une session antérieure) son profil auprès du serveur 30, c'est-à-dire indiqué le numéro de téléphone de son téléphone mobile 40 au serveur 30.

Le terminal de l'utilisateur 10 n'est pas nécessairement un téléphone mobile 40, par exemple de type GSM, mais peut également être constitué par un PDA contenant un certificat numérique.

De manière générale, tout appareil connecté en TCP/IP et pouvant contenir un certificat convient. Il peut s'agir de tout terminal mobile, tel qu'un téléphone ou un PDA, contenant ou non une carte Sim, l'essentiel étant qu'il contienne un certificat numérique, par exemple de type X509, pour l'authentification mutuelle.

Une authentification mutuelle par SSL est alors lancée : le serveur 30 se connecte au terminal 40 de l'utilisateur 10 grâce au numéro de téléphone récupéré dans le profil de l'utilisateur 10. Le mécanisme permettant d'établir la connexion TCP/IP au terminal 40 grâce au numéro de téléphone de l'utilisateur doit être fourni par l'opérateur du réseau de télécommunications auquel appartient la carte Sim. Ce mécanisme ne fait pas partie de la présente invention.

Cette étape est schématisée par la flèche 3. La carte Sim authentifie alors le serveur 30 grâce à son certificat. Le serveur 30 authentifie également l'utilisateur 10 par le certificat présent dans la carte Sim. L'accès à ce certificat peut être protégé par un code PIN. Ceci permet de mettre en oeuvre une authentification à deux facteurs : quelque chose que l'on sait (le code PIN) et quelque chose que l'on possède (la carte Sim ou le terminal).

Ce certificat est typiquement un certificat X509 de l'IUT. Dans le système X.509, une autorité de certification attribue un certificat liant une clé publique à un nom distinctif (Distinguished Name ou encore DN) de l'autorité de certification émettrice, à une adresse e-mail ou un enregistrement DNS.

Les certificats racines sont des clés publiques non signées, ou auto-signées, mais dignes de confiance. Des autorités de certification commerciales détiennent des certificats racines présents dans de nombreux logiciels, par exemple les navigateurs. Internet Explorer^{™} ou Firefox^{™} contiennent quelques certificats racines préinstallés. Quand le navigateur ouvre une connexion sécurisée (SSL) à un site ayant acheté une certification auprès d'une autorité connue, il considère que le site est sûr, et le passage en mode sécurisé est transparent.

Cette connexion SSL permet au serveur distant d'authentifier avec certitude l'utilisateur 10. Le protocole TCP-IP, ou tout autre protocole permettant d'assurer une communication entre le serveur 30 et le terminal 40, assure l'interface entre la carte SIM et l'Internet/le serveur 30.

L'utilisateur 10 est alors invité à entrer dans son terminal 40 le message imprédictible préalablement reçu sur l'ordinateur 20. La saisie, schématisée par 4, de ce message imprédictible est par exemple réalisée de la même manière que l'utilisateur 10 entre classiquement un texte SMS dans son terminal.

Une fois le message saisi, celui-ci est renvoyé (flèche 5) par l'utilisateur au serveur 30 et ce dernier authentifie l'utilisateur 10 grâce au certificat contenu dans la carte Sim.

Enfin, le serveur 30 compare le message imprédictible transmis à l'ordinateur 20 de l'utilisateur avec celui reçu via la connexion SSL sécurisée 5. En cas de concordance du message entré par l'utilisateur 10 dans le terminal 40 avec le message imprédictible, l'utilisateur 10 est authentifié de manière certaine dans le serveur distant 30. Le serveur 30 peut alors diriger l'utilisateur 10 sur sa page personnalisée d'accueil (flèche 6) et l'utilisateur 10 peut communiquer de manière sécurisée avec le serveur 30 via l'ordinateur 20.

L'avantage de l'invention est qu'aucune authentification mutuelle n'est réalisée directement entre le serveur 30 et l'ordinateur 20 utilisé par l'utilisateur 10. L'authentification mutuelle est réalisée sur un autre canal, à savoir celui établi entre le serveur 30 et un terminal 40 appartenant à l'utilisateur 10. Ce dernier peut donc accéder de manière sécurisée au serveur 30 à partir de n'importe quel ordinateur 20, par exemple à partir d'un cybercafé.

L'avantage de l'invention est la possibilité d'établir une authentification forte à l'aide de certificats (PKI) grâce à un canal SSL à authentification mutuelle, en évitant toute intéraction avec l'ordinateur utilisé.

Il n'est pas nécessairement fait appel à une sécurisation par SSL : tout autre procédé permettant d'effectuer une authentification mutuelle par certificat est utilisable. Cependant, SSL est le seul implémenté sur les navigateurs par défaut et donc le plus utilisé.

L'invention permet également de déléguer une authentification : prenons l'exemple d'un enfant qui désire acheter un produit par Internet. Cet enfant se connecte au site vendeur en entrant le nom d'utilisateur de ses parents, reçoit un message imprédictible et contacte (par exemple par téléphone) ses parents pour obtenir l'autorisation d'acheter ce bien. Ses parents reçoivent un message sur leur terminal (téléphone mobile par exemple) avec la description du produit souhaité par l'enfant. Les parents entrent alors dans leur téléphone mobile le message imprédictible qui leur a été indiqué par leur enfant, ce qui autorise l'achat par l'enfant du bien mentionné.

Le numéro de téléphone du terminal de l'utilisateur peut être entré soit lors d'une connexion préalable au serveur, soit lorsque l'utilisateur entre son nom d'utilisateur dans le serveur.

Un autre aspect de l'invention réside dans le chargement des certificats dans la carte Sim. Ce chargement peut être réalisé de différentes manières. Quatre solutions sont données ci-dessous.

Une première solution consiste à fournir à l'utilisateur une carte Sim comportant seulement un nombre limité de certificats racines. Des moyens sont disponibles aux fournisseurs de service, tel qu'eBay^{™} par exemple, pour inscrire par mécanisme OTA (« Over The Air » en anglais) des certificats d'utilisateur dans la carte Sim, à la demande de l'utilisateur, par exemple lorsque l'utilisateur demande à être authentifié dans le profil qu'il remplit auprès d'eBay^{™}.

Une deuxième solution consiste à fournir à l'utilisateur une carte Sim ne contenant qu'un certificat appartenant à son opérateur de téléphonie mobile. Les fournisseurs de service requièrent alors de l'opérateur (qui devient une autorité de certification) un certificat d'utilisateur lorsque l'utilisateur demande à être authentifié dans le profil qu'il remplit auprès ces fournisseurs de service. Ces certificats d'utilisateur sont ensuite transmis via OTA à la carte Sim.

Une troisième solution, proche de la précédente, consiste à demander à un tiers de confiance d'envoyer via OTA des certificats dans les cartes Sim. De tels tiers de confiance sont par exemple Keynectics^{™} ou Chambersign^{™} et proposent à leurs clients la mise à disposition d'infrastructures à clés publiques permettant le déploiement de certificats électroniques.

Enfin, une quatrième solution consiste à fournir à l'utilisateur une carte Sim contenant un certificat d'utilisateur et le fournisseur de services lie le nom de l'autorité de certification émettrice (DN) avec le profil de l'utilisateur lorsque l'utilisateur demande à être authentifié dans le profil qu'il remplit auprès ces fournisseurs de service.

## Revendications

1. Procédé d'authentification d'un utilisateur (10) accédant à un serveur distant (30) à partir d'un ordinateur (20), ledit procédé consistant à :
- se connecter audit serveur distant (30) à partir dudit ordinateur (20) ;
- s'identifier auprès dudit serveur distant (30) à l'aide d'un identifiant propre audit utilisateur (10) ;
- authentifier ledit serveur distant (30) au niveau dudit ordinateur (20) ;
- transmettre dudit serveur distant (30) audit ordinateur (20) un message imprédictible ;
- établir une communication entre ledit serveur distant (30) et un terminal (40) appartenant audit utilisateur (10) ;
- authentifier ledit serveur distant (30) au niveau dudit terminal (40) ;
- authentifier ledit terminal (40) au niveau dudit serveur distant (30) ;
- inviter ledit utilisateur (10) à entrer ledit message imprédictible dans ledit terminal (40) ;
- transmettre audit serveur distant (30) à l'aide dudit terminal (40) le message entré par ledit utilisateur (10) dans ledit terminal (40) ;
- en cas de concordance dudit message entré par ledit utilisateur (10) dans ledit terminal (40) avec ledit message imprédictible, authentifier ledit utilisateur (10) dans ledit serveur distant (30).

2. Procédé selon la revendication 1, **caractérisé en ce que** lesdites authentifications sont réalisées par protocole SSL.

3. Procédé selon l'une des revendications 1 et 2, **caractérisé en ce que** ledit terminal est un terminal mobile (40) comprenant une carte SIM TCP/IP.

4. Procédé selon l'une des revendications 1 à 3, **caractérisé en ce que** ledit terminal mobile est un téléphone mobile (40).

5. Procédé selon l'une des revendications 1 à 3, **caractérisé en ce que** ledit terminal mobile (40) est un PDA.

6. Procédé selon l'une des revendications 1 à 5, **caractérisé en ce que** ladite authentification dudit terminal (40) au niveau dudit serveur distant (30) est réalisée après que ledit utilisateur (10) ait entré un code PIN dans ledit terminal (40).
